# EUROPEAN PATENT SPECIFICATION

(11) **EP 2 073 911 B1**
(45) Date of publication and mention of the grant of the patent: **20.11.2013**
(21) Application number: 07808394.6
(22) Date of filing: 20.09.2007
(51) Int. Cl.: B01D 46/00, B01D 53/02, B01D 46/54, B01J 20/02, B01J 20/06, B01J 20/20, B01J 20/34, B01D 46/44, B01D 39/12, B01J 20/32, B01J 20/28, B82Y 30/00

(54) **NANOWIRE FILTER, METHOD FOR MANUFACTURING THE SAME, METHDO FOR REMOVING MATERIAL ADSORBED THEREON, AND FILTERING APPARATUS HAVING THE SAME**
NANODRAHTFILTER, HERSTELLUNGSVERFAHREN DAFÜR, VERFAHREN ZUR ENTFERNUNG VON DARAN ADSORBIERTEM MATERIAL UND FILTRIERVORRICHTUNG DAMIT
FILTRE À NANOFILS, SON PROCÉDÉ DE FABRICATION, MÉTHODE D'ÉLIMINATION DE MATÉRIAU ADSORBÉ SUR LE FILTRE ET DISPOSITIF DE FILTRATION AINSI ÉQUIPÉ

(30) Priority: 27.09.2006 KR 20060094385
(43) Date of publication of application: 01.07.2009
(73) Proprietor: Electronics and Telecommunications Research Institute, Yuseong-gu Daejon 305-350 (KR)
(72) Inventor: YU Han-Young, Daejon 305-751 (KR); KIM An-Soon, Daejon 301-070 (KR); AH Chil-Seong, Daejon 302-280 (KR); BAEK In-Bok, Chungbuk 361-744 (KR); YANG Jong-Heon, Daejon 302-775 (KR); AHN Chang-Geun, Daejon 305-751 (KR); LEE Seong-Jae, Daejon 305-345 (KR); ZYUNG Tae-Hyoung, Daejon 305-345 (KR)
(74) Representative: Betten & Resch
(86) International application number: PCT/KR2007/004616
(87) International publication number: WO 2008/038954

(56) References cited:
- WO-A1-2005/075048
- KR-A- 20020 061 087
- KR-A- 20040 056 132
- US-A1- 2004 007 528
- US-A1- 2006 096 260
- US-A1- 2006 168 924
- US-B1- 6 199 397

## Description

### Technical Field

The present invention relates to a filter; and, more particularly, to a nanowire filter, a method for manufacturing the same, a filtering apparatus with the same, and a method for removing material adsorbed on the nanowire filter.

### Background Art

Hazardous organics generated by the result of industrialization, particulate hazardous materials or hazardous organics used in newly built buildings like new houses, gases fatal to a human body required in a semiconductor process, carcinogenic substances found upon smoking or in the air or in construction sites, and so on have an enormous effect on human lives and sustainment and cause a decrease in the human life span.

The apparatuses filtering such fundamental hazardous organic materials and gases, particles, etc. are filters. As these filters, an HEPA (High Efficiency Particulate Air) filter and a charcoal filter have been used. The HEPA filter is used for filtering particles in the air. The charcoal filter is used for filtering organics, i.e., gaseous substances.

However, with the acceleration of industrialization, materials fatal to a human body are contained in the air in a complex way. Particularly, these materials have two physical properties, that is, exist in both gaseous and particulate forms. Thus, there are some limitations with the conventional HEPA filter or charcoal filter independently used according to each physical property. Consequently, there is an urgent need for a filter simultaneously filtering both gases and particles.
Document WO 2005/075048 A1 describes a filter comprising a supporting member and a plurality of nanowires supported on the supporting member and arranged in a crystallized state.

### Disclosure of Invention

### Technical Problem

It is, therefore, an object of the present invention to provide a nanowire filter and method for manufacturing the same, which filters a hazardous material of a particulate and gaseous state simultaneously.

Another object of the present invention is to provide a filtering apparatus having the nanowire filter.

Another object of the present invention is to provide a method for removing an absorption material which increases an efficiency of the nanowire filter by stably detaching the material absorbed on the nanowire filter.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### Technical Solution

In accordance with an aspect of the present invention, there is provided a filter according to claim 1.

In accordance with another aspect of the present invention, there is provided a method for manufacturing a filter according to claim 8

In accordance with another aspect of the present invention, there is provided a method for removing a material adsorbed on the filter of a filtering apparatus according to claims 15 or 17.

As described above, conventionally, a charcoal filter has been used as a filter for filtering hazardous organic gases, and an HEPA filter has been used as a filtering for filtering particulate hazardous materials. However, no filter for filtering both gaseous and particulate materials has been suggested yet.

Accordingly, the present invention provides a filter capable of filtering both chemical gases and physical gases, i.e., particulate materials, and a method for manufacturing the same. As means for implementing the above, nanowires, that is, nanowires whose structures are crystallized and nanowires stacked with a material having a shape or structure different from that of basic nanowires are used, and the gap between the nanowire structures is made blank to be used as a filter.

For instance, in the structure of vanadium oxide (V₂O₅) nanowires, vanadium oxide nanowires are kept in a crystal form at both sides, and water (H₂O) is filled therebetween. In this structure, the material filled between the vanadium oxide nanowires, i.e., the water can be easily released from between the vanadium oxide nanowires, and the size of the space occupies most parts of the overall surface area of the vanadium oxide nanowires. A general gaseous material is easily adsorbed in the space from which the water is released, and physically, the material having the particle characteristics is adsorbed between different nanowires as the momentum decreases.

In the present invention, a nanowire filter is manufactured by using the aforementioned technical principle. Further, it is proven through experimental result data that the nanowire filter so manufactured operates as a filter by flowing generally and widely known hazardous organic gases and particles thereto.

Furthermore, the nanowire filter suggested in the present invention is manufactured so as to have a platy structure in which the surface area thereof is wider than the surface area of a charcoal filter, which is a typical porous material, thereby maximizing the filter effect.

The nanowires used in the present invention have a platy structure in which one vanadium oxide material forms one plate and another vanadium oxide material forms another plate, to have water (H₂O) existed between the two plates. Here, the water can be easily expelled. The surface area generated when expelling the water to the outside has an area similar to the overall area of the nanowire. Further, even if the water between the nanowires is not expelled, the water is not uniformly distributed over the entire surface but an empty space therein is maintained. When organic gases or particles are collected in this empty space, it is useable as a filter of material.

The present invention manufactures the nanowire having such a structure in a film form and utilizes it as a filter. The filter used therein is manufactured by using as a supporting member a typical porous glass or filter paper or a sponge having several to several hundreds of micrometers of holes or a material having such a structure and attaching nanowires on the top or bottom portion thereof or the entire structure thereof. The filter having such a structure is attached to a filler opening of hazardous organics or gaseous or particulate materials and operates as a filter.

As used herein, the term "nanowire" generally refers to any elongated metal or semiconductor material that includes at least one cross sectional dimension that is less than 500 nm, and preferably, less than 100 nm, and has an aspect ratio (length:width) of greater than 10, preferably greater than 50, and more preferably, greater than 100. Examples of nanowires include semiconductor nanowires, carbon nanotubes, and other elongated metals or semiconductors of like dimensions. Particularly, preferred nanowires include semiconductor nanowires, which are made of a semiconductor material selected from, e.g., Si, Ge, Sn, Se, Te, B, C (including diamond), P, B-C, B-P(BP₆), B-Si, Si-C, Si-Ge, Si-Sn and Ge-Sn, SiC, BN/BP/BAs, AlN/AlP/AlAs/AlSb, GaN/GaP/GaAs/GaSb, InN/InP/InAs/InSb, BN/BP/BAs, AlN/AlP/AlAs/AlSb, GaN/ GaP/GaAs/GaSb, InN/InP/InAs/InSb, ZnO/ZnS/ZnSe/ZnTe, CdS/CdSe/CdTe, HgS/ HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, CuI, AgF, AgCl, AgBr, AgI, BeSiN₂, CaCN₂, ZnGeP₂, CdSnAs₂, ZnSnSb₂, CuGeP₃, CuSi₂P₃, (Cu, Ag)(Al, Ga, In, Ti, Fe)(S, Se, Te)₂ , Si₃N₄, Ge₃N₄, Al₂O₃, (Al, Ga, In) (S, Se, Te)₃, Al₂CO, and appropriate combinations of two or more such semiconductors.

Although the term "nanowire" is referred to throughout the description herein for illustrative purposes, it is intended to also encompass the use of nanotubes. Nanotubes can be formed in combinations/thin films of nanotubes alone or with nanowires, as is described for nanowires, thereby providing the properties and advantages described herein.

Furthermore, it should be noted that thin film of nanowires of the present invention can be a "heterogeneous" film, which incorporates semiconductor nanowires, nanotubes, or nanowires and/or nanotubes of different composition and/or structural characteristics.

Moreover, the nanowires of the present invention can grow or be attached on a substrate, such as the interior and exterior surface of a tube, e.g., the interior and exterior surface of a macroporous medium, such as reticulated macroporous metal, oxide, ceramic, or other combined porous media, or can be adsorbed on a sponge-shaped supporting material.

### Advantageous Effects

As described above, in accordance with the present invention, the following effects can be achieved.

First, in accordance with the present invention, chemical or physical fine particulate and gaseous materials can be stably filtered by a filter manufactured by using nanowires, so that generally and widely known hazardous organics, volatile organics, harmful particles, and harmful organisms and bacteria are filtered, thereby providing a clean environment to a user.

Second, in accordance with the present invention, the filtration rate of hazardous organics can be further increased by providing a filtering apparatus with a plurality of nanowire filters arranged in series, in parallel, or in series and parallel.

Third, in accordance with the present invention, in the filtering apparatus with a plurality of nanowire filters arranged therein, the plurality of nanowire filters are manufactured in a manner that the filters having nanowires with a high density arranged therein and the filters having nanowires with a relatively low density arranged therein are manufactured separately so that they are arranged in series or in parallel to face each other, thereby selectively filtering particulate materials and gaseous materials.

Fourth, in accordance with the present invention, in the filtering apparatus with a plurality of nanowire filters arranged therein, a plurality of fluid flow paths of the filtering apparatus are provided, a plurality of valves are arranged in each of the fluid flow paths, and the operation of the valves thus aligned is controlled to control the flow of fluid, so that the use of the nanowire filters can be properly adjusted depending on the amount of hazardous organics, thereby increasing the life span of the nanowire filters while increasing the filtration rate.

Fifth, in accordance with the present invention, nonvolatile gases such as nitrogen and air are introduced to the nanowire filters, with heat applied to the nanowire filters on which organic hazardous materials are adsorbed, or the organic hazardous materials adsorbed on the nanowire filters are stably removed by using a pressure difference between the input part and output part of the filtering apparatus, thereby greatly increasing the reuse rate of the nanowire filters and in turn improving the utility of the nanowire filters.

### Brief Description of the Drawings

Fig. 1 is a configuration diagram for explaining a filtering apparatus in accordance with a first embodiment of the present invention.

Fig. 2 is a configuration diagram for explaining a filtering apparatus in accordance with a second embodiment of the present invention.

Fig. 3 is an experimental result diagram showing the filtration rate of the nanowire filter of the present invention with respect to acetone.

Fig. 4 is a diagram showing the experimental result of filtering a mixed gas of acetone and nitrogen by the nanowire filter of the present invention and then removing the acetone collected on the nanowire filter.

Fig. 5 is an experimental result diagram showing the amount of acetone measured when two nanowire filters of the present invention are used.

Fig. 6 is an experimental result diagram showing the amount of toluene measured when two nanowire filters of the present invention are used.

### Best Mode for Carrying Out the Invention

Hereinafter, preferred embodiments of the present invention will be described in detail so that a person skilled in the art can readily carry out the invention. In the following description, the same reference numerals are denoted for the same components or members throughout the specification.

**Embodiment 1**

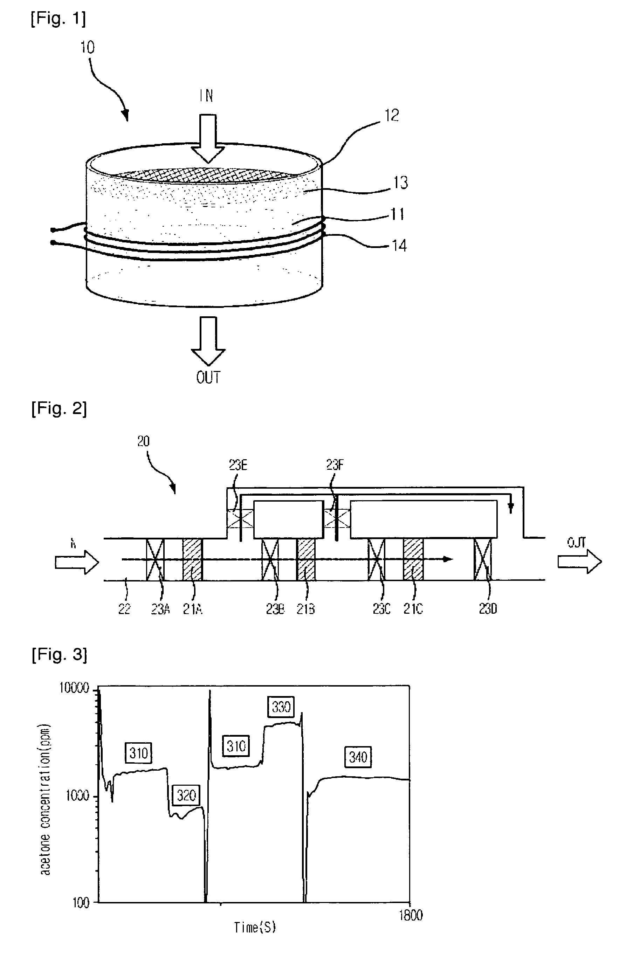

Fig. 1 is a configuration diagram shown to explain a filtering apparatus in accordance with a first embodiment of the present invention.

Referring to Fig. 1, the filtering apparatus 10 in accordance with the first embodiment of the present invention includes a filter 11 in which a plurality of crystallized nanowires is regularly or irregularly arranged to have an empty space existing between the respective nanowires. At this time, the filter 11 may further include molecular material filling some or all parts of the empty space between the nanowires arranged in a crystallized state.

A thin film of nanowires consisting of a plurality of nanowires constituting the filter 11 may be formed in a wide range of possible surface areas. For example, thin films of nanowires can be formed to have functional areas greater than 1 mm², greater than 1 cm², greater than 10 cm², greater than 1 m², and even greater or smaller areas.

The thin film of nanowires includes a plurality of individual nanowires closely located to each other. The thin film of nanowires can have a variety of thickness amounts that are equal to or greater than the thickness of a single nanowire. In one example, the nanowires of the thin films of nanowires are arranged such that their long axes are generally parallel to each other. In another example, the individual nanowires of the thin film of nanowires are not aligned, and instead may be arranged in different directions with respect to each other, either randomly or otherwise.

The thin film of nanowires can be formed by using spin coating, adsorption using a pipette or spuit, and a spray process.

In one example, the method using spin coating is a method for adsorbing or attaching nanowires on a porous material such as a sponge or a reticulated material by a spin coating technique. At this time, it is possible to manufacture a thin film of nanowires having a complex stacked structure by properly increasing the number of times of spin coating. In this case, the thin film of nanowires is manufactured in a manner that adsorbs the nanowires on the porous material by spin coating, stacks another porous material on the top portion thereof, followed by spin coating nanowires again.

In another example, the spray process is a method for manufacturing a thin film by ejecting nanowires on a porous material or a reticulated material in a spray pattern. Specifically, the spray process manufactures a thin film by adsorbing nanowires on a porous material by ejecting them in a spray pattern, stacking another porous material on the top portion thereof, and then ejecting nanowires again in a spray pattern, as in the spin coating method.

Meanwhile, a nanowire filter may be manufactured by molecular and surface treatment for properly adsorbing nanowires on a supporting member in order to increase the superiority of adsorptivity and decrease removability upon adsorbing nanowires on the supporting member. That is, a material such as an adhesive is used before or after arranging nanowire on the supporting member so that the nanowires can be easily and firmly secured to the supporting member.

For instance, the adhesive may include any chemical materials having a silane group that contains APTES (AminoPropylTriEthoxysilane) and APTMS ((3-AminoPropyl)TriMethoxySilane), which are materials that increases the hydrophilic property containing molecules. The filter is manufactured by adsorbing molecules of these chemical materials on the surface of the supporting member to make the surface of the supporting member hydrophilic and then arranging nanowires. Alternatively, the filter may be manufactured by making the surface hydrophilic by using a plasma method such as O₂ ashing and arranging nanowires. Or, the filter may be manufactured by attaching an oxygen group on the supporting member and then arranging nanowires.

Further, after arranging the nanowires on the supporting member by the aforementioned methods, the adhesive may be filled between the nanowires so that the nanowires are not easily removed by a connection between the nanowires. At this time, the adhesive may include polymers, oils, or semiconductor materials. The polymers include both conductive and nonconductive polymers, the oils include every oil having adhesiveness, and the semiconductor materials include every material that is used in a semiconductor manufacturing process including spraying and deposition, e.g., CVD and PECVD (Plasma Enhanced Chemical Vapor Deposition) processes. The materials that can be adsorbed by the aforementioned deposition methods are all useable.

Meanwhile, after manufacturing a thin film of nanowires by the above methods, the manufactured thin film of nanowires may be made in a platy shape by being compressed vertically or laterally. I addition, the single nanowire plates thus manufactured are made in multiple plates by being joined to each other. Further, nanowires may be adsorbed or attached on the single nanowire plates or the multiple plates by the above methods.

Another method of forming a thin film of nanowires is to form it in a bar-shaped structure by using only nanowires. This method requires a supporting member capable of securing nanowires vertically or laterally. This method also enables the formation of a multilayered structure.

On the other hand, molecular materials for filing the empty space between the nanowires arranged in an uncrystallized state in the filter 11 are not restricted, but any materials that can be easily adsorbed and removed between the nanowires are all useable. For example, air molecules, water molecules, or nitrogen molecules can be used.

In addition, as shown in Fig. 1, the filtering apparatus 10 in accordance with the first embodiment of the present invention further includes a filter body 12 into which the filter 11 is inserted and secured. The filter body 12 is formed in a cylindrical structure in which the top portion and the bottom portion communicate with each other, with an inlet provided on the top portion, for introducing hazardous organics and gases and particulate organics, and an outlet provided on the bottom portion, for filtering the hazardous gases and particles introduced through the suction port by the filter 11 and discharging them. Besides, various types of air flow apparatuses of can be installed at the suction port in order to control the inlet velocity of the hazardous gases and particles introduced into the suction port. At this time, it should be construed that the air flow apparatuses encompass every apparatus capable of controlling an air flow.

Although the filter body 12 is manufactured in a round structure as shown in Fig. 1, this is only one example and any types for stably securing the filter 11 are all applicable. For instance, in case the filter 11 is manufactured by using a porous material or a reticulated material as a supporting one, the filter is manufactured to have a shape that the porous material or the reticulated material can be stably inserted and secured. Alternatively, in case the nanowires are manufactured in a bar shape, the filter may be manufactured such that the filter body 12 (which is used as a supporting member of the nanowires) can have such a shape that can stably arrange the nanowires along the inner peripheral surface of the filter body 12. For example, the filter may be manufactured in various shapes having a polygonal structure, such as a triangle, rectangle, hexagon, octagon, etc.

Meanwhile, the utilization of the filter 11 needs to be increased by reusing the filter 11, rather than discarding the same after using it one time. For this, the filtering apparatus 10 in accordance with the first embodiment of the present invention further includes a heating net 13 as a heating member in order to remove the material adsorbed on the filter 11 in a filtering procedure.

The heating net 13 is manufactured in a reticulated form and installed at the front (or rear) in a direction opposite to the filter 11. The heating net 13 forms a net by arranging a plurality of hot wires that are not in contact with each other regularly or irregularly in a two-dimensional or three-dimensional structure, and generates heat in response to a voltage supplied from a power supply unit (not shown). That is, the heating net 13 converts electrical energy supplied from the power supply unit into heat energy and applies heat to the filter 11.

Further, the filtering apparatus 10 in accordance with the first embodiment of the present invention further includes a hot wire 14 as a heating member in order to directly apply heat to the filter 11. The hot wire 14 is installed at the filter body 12 of a portion corresponding to the filter 11. In other words, the hot wire 14 generates heat by having a wire or coil generating heat wound along the outer peripheral surface of the filter body 12 with the filter 11 inserted and secured therein and supplying a power voltage to the thus wound wire or coil from the power supply unit.

Hereinafter, a method for removing the material adsorbed on the filter 11 by using the heating net 13 and the hot wire 14 will be described.

First, power is supplied from the power supply unit to the heating net 14 and the hot wire 14. Then, the heating net 13 and the hot wire 14 generate heat by converting electrical energy supplied from the power supply unit into heat energy. In this state, gases, e.g., inert gases including oxygen (O₂), nitrogen (N₂), helium (He), and argon (Ar), and air are introduced into the inlet of the filter body 12.

Afterwards, the inert gases and air introduced into the inlet of the filter body 12 are heated by the heat applied from the heating net 13, so that the temperature thereof increases higher than the temperature before they are introduced to the inlet. At this time, the filter 11 is also heated by the hot wire 14 to have a higher temperature. Therefore, the material adsorbed on the filter 11 has a certain degree of potential by an increase in the temperature of the filter 11. In this state, the adsorbed material having a high temperature and having a potential by the inert gases passing through the filter 11 is removed from the filter 11.

Moreover, a propulsion device for providing a pressure difference, including a vacuum apparatus, is attached to the exit side in the filtering apparatus 10 to remove adsorbed material. For example, the entrance of the filtering apparatus 10 is blocked, and an apparatus for air exhaustion, i.e., an apparatus such as a vacuum apparatus, is installed only at the exit side and driven, thereby removing adsorbed material by a pressure difference between the entrance and the exit.

Meanwhile, the number of filters 11 existing within the filtering apparatus 10 is not restricted. That is, a plurality of filters may be installed in series or in parallel in order to increase the filtration rate.

**Embodiment 2**

Fig. 2 is a diagram shown for explaining the configuration of a filtering apparatus in accordance with a second embodiment of the present invention. In Fig. 2, a structure having three filters installed in series will be explained by way of example.

Referring to Fig. 2, the filtering apparatus in accordance with the second embodiment of the present invention has a plurality of filters 21A, 21B, and 21C installed within a filter body 22 with a plurality of fluid paths provided therein. At this time, the filters 21A, 21B, and 21C are manufactured in the same configuration and method as the filter 11 described through the first embodiment of the present invention, and arranged in series in a direction opposite to each other.

Further, at least one valve 23A, 23B, 23C, 23D, 23E, and 23F may be installed at the plurality of fluid paths provided in the filter body 22. Especially, each of the valves 23A, 23B, and 23C is installed at the front side of each of the filters 21A, 21B, and 21C, thereby controlling the flow of fluid within the filter body 22.

In the structure as shown in Fig. 22, a fluid is discharged to the outlet through two directions after it is introduced through the inlet. The first fluid flow direction (see dotted arrow) is a direction that passes through all of the three filters 21A, 21B, and 21C, and the second fluid flow direction (see solid arrow) is a direction that passes through only one filter 21A or two filters 21A and 21B. Such various fluid path directions are achieved by properly controlling the valves 23A, 23B, 23C, 23D, 23E, and 23F.

For example, in case the first filter 21A cannot adsorb any more hazardous material since it has adsorbed a hazardous material, the second, third and fourth valves 23B, 23C, and 23D are opened to adsorb the hazardous material, which is not filtered by the first filter 21A, by the second and third filters21B and 21C. In another example, in case the first filter 21 A has the ability to filter any hazardous material introduced, the second valve 23B is closed and the fifth valve 23E is opened, thereby discharging the fluid passing through the first filter 21A, i.e., the fluid from which the hazardous material is removed, through the fifth valve 23E.

In this way, the number of filters and the performance of filters can be adjusted by stepwise adsorption.

Further, the filtration rate of the filters can be maximized by controlling the flow of fluid by means of changing the structure of the filter body 22, arranging the filters in series, in parallel, and in an overlapped structure in consideration of the position and shape of the filters, and installing the valves at the right place of the filter body 22.

The nanowire filter in accordance with the embodiments of the present invention set forth above employs the following characteristics.

When comparing the collection ability with respect to the nanowire filter by gases, the collection ability of the gases having a weak chemical reactivity, e.g., helium, nitrogen, and oxygen, is remarkably lower than that of the gases having a strong chemical reactivity, e.g., hazardous organic compounds containing acetone, methanol, styrene, benzene, toluene, formaldehyde, xylene, ethyl benzene, hydrazine, dichloromethane, etc., and their complex substances, toxic gases, tobacco smokes and so on. Like this, by using the difference in the collection ability of the nanowire filter for each gas, it is possible to filter toxic gases and hazardous organic compound gases.

In one example, in case of a vanadium oxide nanowire filter, toxic gases and hazardous organic compounds can be collected in a space filled with water. Further, as for particulate toxic materials, when these toxic particulate materials collide with nanowires, the momentum of the toxic particulate materials moves to the nanowires and their inherent momentum is lost, so that they are collected in an empty space between the individual nanowires constituting the nanowire filter.

Hereinafter, the operational effects of the present invention will be proven in association with experimental result data.

Fig. 3 is a diagram showing the filtration rate of the nanowire filter with respect to acetone. In Fig. 3, '310' is a graph showing the amount of acetone measured in a mixed gas diluted by mixing about 10 sccm of nitrogen gas with acetone and then mixing about 1000 sccm of nitrogen gas therewith, and '320' is a graph showing the amount of acetone measured after passing the mixed gas through the nanowire filter to filter acetone. Further, '330' is a graph showing the amount of acetone measured in a mixed gas diluted by mixing about 20 sccm of nitrogen gas with acetone and then mixing about 1000 sccm of nitrogen gas therewith, and '340' is a graph showing the amount of acetone measured after passing the mixed gas through the nanowire filter to filter acetone.

Referring to Fig. 3, with about 1000 sccm of nitrogen gas introduced into the nanowire filter, when a mixed gas of about 10 seem of nitrogen and acetone is introduced into the nanowire filter, acetone of the same amount as in '310' is detected. After the acetone of this amount is filtered through the nanowire filter, acetone of the same amount as in '320' is detected. That is, it can be seen that about 3/4 of the acetone is adsorbed on the nanowire filter, and about 1/4 of the acetone is discharged to the discharge port.

Meanwhile, when the amount of acetone is further increased than that in '310', and a mixed gas of the acetone so increased and about 20 sccm of nitrogen is again mixed with about 1000 sccm of nitrogen and then introduced into the nanowire filter, acetone of the same amount as in '330' is detected. After the acetone of this amount is filtered through the nanowire filter, acetone of the same amount as in '340' is detected. In this case, it can also be seen that about 3/4 of the acetone is collected and filtered by the nanowire filter,

Based on this experimental result, it was proven that the nanowire filter collects acetone.

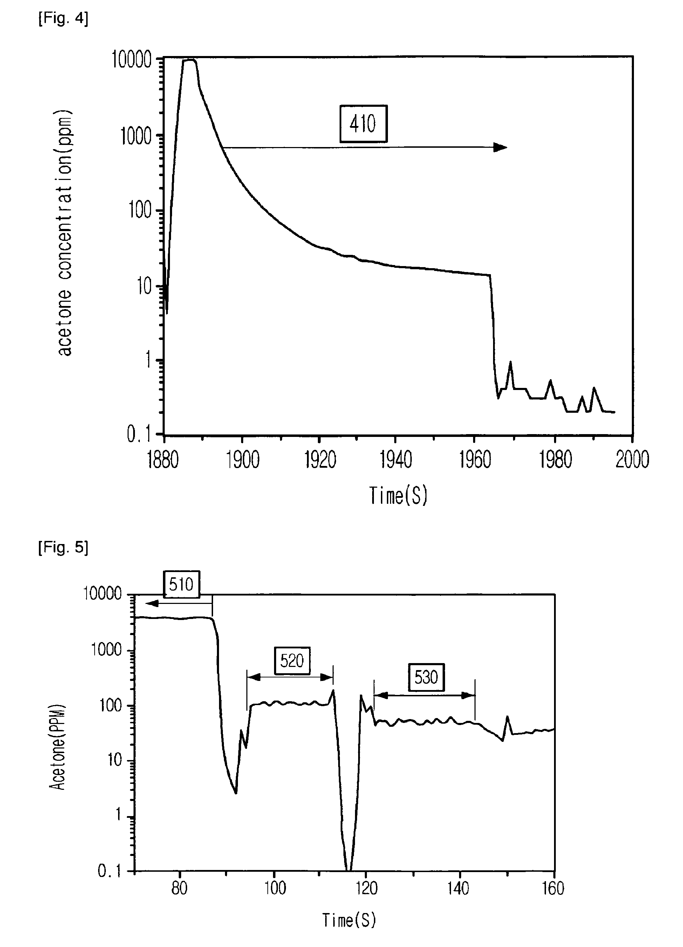

Meanwhile, Fig. 4 proves another important fact. That is, the amount 410 of acetone gradually decreases with time when 1000 sccm of nitrogen gas is introduced.

Fig. 4 is an experimental result diagram showing the result of filtering a mixed gas of acetone and nitrogen by the nanowire filter of the present invention and then removing the acetone collected on the nanowire filter. From Fig. 4, it can be seen that the amount 410 of acetone measured gradually decreases with time. The method used here is to measure the amount of acetone constantly shown by dropping not acetone but about 1000 sccm of nitrogen gas alone on the inlet of the nanowire filter.

Concretely, in case the acetone collected on the nanowire filter is not removed but exists as it is in the nanowire filter, the collection ability of the nanowire filter is degraded and thus cannot be reutilized. Therefore, when approximately 1000 sccm of nitrogen gas is dropped on the nanowire filter where acetone is collected, the amount of acetone gradually decreases with time. This is because as nitrogen is dropped, the acetone collected in the nanowire filter is gradually detached from the collecting part and thus discharged to the outside. Moreover, when heat is simultaneously applied through the heating net and the hot wire, the degree of separation of acetone collected on the nanowire filter becomes greater.

Fig. 5 is an experimental result diagram showing the amount of acetone measured when two nanowire filters are used. In Fig. 5, likewise Fig. 3, '510' is a graph showing the amount of acetone measured in a mixed gas diluted by mixing about 10 sccm of nitrogen gas with acetone and then mixing about 1000 sccm of nitrogen gas therewith, and '520' is a graph showing the amount of acetone measured after passing the mixed gas through the first nanowire filter to filter acetone. Further, '530' is a graph showing the amount of acetone measured after passing the mixed gas passed through the first nanowire filter through the second nanowire filter to filter acetone.

Referring to Fig. 5, with about 1000 sccm of nitrogen gas introduced into the nanowire filter, when a mixed gas of about 10 sccm of nitrogen and acetone is introduced into the nanowire filter, acetone of the same amount as in '510' is detected. After acetone of this amount is filtered through the first nanowire filter, acetone of the same amount as in '520' is detected, and after acetone of this amount is filtered through the second nanowire filter, acetone of the same amount as in '530' is detected. That is, it can be seen that after filtration through the two nanowire filters, the amount of acetone decreases to about 1/100 of the initial amount not filtered through any nanowire filter.

Up to now, the collection ability of the nanowire filters with respect to acetone has been described through experimental results.

Hereinafter, the collection ability of the nanowire filters with respect to another hazardous organic, for example, toluene, will be explained.

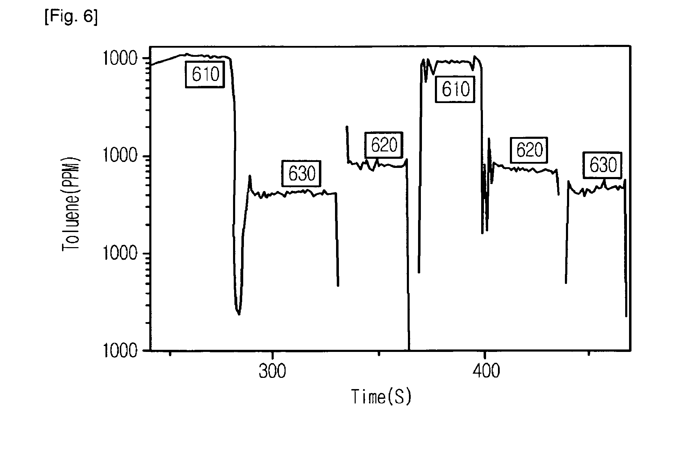

Fig. 6 is an experimental result diagram showing the amount of toluene measured by using the method of dropping a nitrogen gas under the same condition as Fig. 5, except that the hazardous organic is changed from acetone to toluene. In Fig. 6, under the same condition as Fig. 5, '610' is a graph showing the amount of toluene measured in a mixed gas diluted by mixing about 10 sccm of nitrogen gas with toluene and then mixing about 1000 sccm of nitrogen gas therewith, and '620' is a graph showing the amount of toluene measured after passing the mixed gas through the first nanowire filter to filter toluene. Further, '630' is a graph showing the amount of toluene measured after passing the mixed gas passed through the first nanowire through the second nanowire filter to filter toluene.

Referring to Fig. 6, with about 1000 sccm of nitrogen gas introduced into the nanowire filter, when a mixed gas of about 10 sccm of nitrogen and toluene is introduced into the nanowire filter, toluene of the same amount as in '610' is detected. After toluene of this amount is filtered through the first nanowire filter, toluene of the same amount as in '620' is detected, and after toluene of this amount is filtered through the second nanowire filter, toluene of the same amount as in '630' is detected. That is, it can be seen that after filtration through the two nanowire filters, the amount of toluene decreases to about 1/25 of the initial amount not filtered through any nanowire filter.

As described above, as in the results of the experiment using acetone and toluene, it can be seen that when a hazardous organic is introduced into the naowire filters, the hazardous organic in the outlet is remarkably reduced. This leads to a greater extent under an everyday environment where a relatively small amount of hazardous organics is distributed.

Furthermore, when the density of the nanowires constituting the filters is adjusted at the time of manufacturing the nanowire filters described in the embodiments of the present invention, both particulate materials and gaseous materials can be adsorbed simultaneously. That is, the filter where the density of the nanowires is not high filters particulate materials, while the filter where the density of the nanowires is high filters hazardous organics. However, this method does not mean that gases are not adsorbed in the portion where the nanowires are not dense, and particles are not adsorbed in the portion where the nanowires are dense.

In other words, the above method should be construed that two physical property types, both particles and gases, can be simultaneously filtered by connecting filters with different densities in series in the manufacturing method of nanowire filters. Further, the above method encompasses crossing a filter with a high density and a filter with a low density with each other and connecting them in series or in parallel, or connecting several filters with a high density in series or connecting several filters with a low density in series, and the structure thereof is not limited to the method suggested herein.

Further, the characteristics of the nanowire filters suggested in the experimental result diagrams of the present invention are not limited to the characteristics of toluene and acetone filters illustrated, but any chemically hazardous materials, as well as particulate hazardous materials, can be filtered. Besides, the amount of harmful bacteria and harmful organisms can be reduced by using the nanowire filters in sick rooms where harmful organisms and bacteria are distributed and in other spaces requiring cleanness.

## Claims

1. A filter (11), comprising:
a supporting member;
a plurality of nanowires supported on the supporting member and arranged in a crystallized state so as to form a thin film of nanowires in a platy shape, whereby multiple plates are joined to each other; and
whereby the filter further comprises a molecular material filling some parts of an empty space formed between the nanowires.

2. The filter of claim 1,
wherein preferably the material is any one selected from air molecules, water molecules, and nitrogen molecules.

3. The filter of claim 1 or 2, wherein the nanowires include semiconductor nanowires or metal nanowires, or
wherein the nanowires are made of any one material selected from Si, Ge, Sn, Se, Te, B, C, P, B-C, B-P(BP₆), B-Si, Si-C, Si-Ge, Si-Sn and Ge-Sn, SiC, BN/BP/BAs, AlN/AlP/AlAs/AlSb, GaN/GaP/GaAs/GaSb, InN/InP/InAs/InSb, BN/BP/BAs, AlN/AlP/AlAs/AlSb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, CuI, AgF, AgCl, AgBr, Agl, BeSiN₂, CaCN₂, ZnGeP₂, CdSnAs₂, ZnSnSb₂, CuGeP₃, CuSi₂P₃, (Cu, Ag)(Al, Ga, In, Ti, Fe)(S, Se, Te)₂, Si₃N₄, Ge₃N₄, Al₂O₃, (Al, Ga, In)₂(S, Se, Te)₃, Al₂CO, and appropriate combinations of two or more such materials, or
wherein the nanowires are made of vanadium oxide, or
wherein the supporting member is made of a porous material or reticulated material.

4. A filtering apparatus (10), comprising:
a filter (11) as defined by any of the preceding claims; and
a body (12) into which the filter is inserted and secured, and which has an inlet for guiding an introduced fluid to the filter and an outlet for discharging the fluid filtered through the filter to the outside.

5. The filtering apparatus of claim 4, further comprising a heating member (13), installed at the front or rear of the filter, for applying heat to the filter,
wherein preferably the heating member is formed in a reticulated form.

6. The filtering apparatus of claim 4, further comprising a heating member (14) wound along the outer peripheral surface of the body, for applying heat to the filter, or
wherein the body further includes a pressure generating member for causing a pressure difference between the front and rear of the filter, or
wherein the body is provided with a plurality of paths through which the fluid moves between the inlet and the outlet,
wherein preferably at least one filter is installed at the paths, or
wherein preferably at least one valve is installed at the paths in order to control the flow of the fluid.

7. The filtering apparatus of claim 4, wherein a plurality of filters are installed at the body,
wherein preferably the plurality of filters have the nanowires arranged with the same density or with different densities.

8. A method for manufacturing a filter (11), comprising the steps of:
providing a supporting member; and
arranging a plurality of crystallized nanowires on the supporting member so as to form a thin film of nanowires in a platy shape, whereby multiple plates are joined to each other; and
further comprising the step of filling a molecular material in some parts of the empty space formed between the nanowires after the step of arranging the nanowires.

9. The method of claim 8, further comprising the step of attaching an adhesive member on the surface of the supporting member so that the nanowires are easily and firmly secured to the supporting member before the step of arranging the nanowires.

10. The method of claim 9, further comprising the step of filling the adhesive member so as to prevent connection between the nanowires arranged on the supporting member from being easily released after the step of arranging the nanowires.

11. The method of claim 9, wherein a chemical material having a silane group is used as the adhesive member,
wherein preferably the chemical material having a silane group is APTES (AminoPropylTriEthoxySilane) or APTMS ((3-AminoPropyl)TriMethoxySilane).

12. The method of claim 8, further comprising the step of making the surface of the supporting member hydrophilic by an O₂ ashing process or by attaching oxygen on the surface of the supporting member before the step of arranging the nanowires, or
wherein preferably the material is any one selected from air molecules, water molecules, and nitrogen molecules.

13. The method of claim 8, wherein the step of arranging the nanowires is carried out by any one of a spin coating method, an adsorption method using a spuit or pipette, and a spray method, or
wherein the nanowires are arranged in a film form on the inner peripheral surface of the supporting member, or
wherein the nanowires include semiconductor nanowires or metal nanowires, or
wherein the nanowires are made of any one material selected from Si, Ge, Sn, Se, Te, B, C, P, B-C, B-P(BP₆), B-Si, Si-C, Si-Ge, Si-Sn and Ge-Sn, SiC, BN/BP/BAs, AlN/AlP/AlAs/AlSb, GaN/GaP/GaAs/GaSb, InN/InP/InAs/InSb, BN/BP/BAs, AlN/AlP/AlAs/AlSb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, Cul, AgF, AgCl, AgBr, Agl, BeSiN₂, CaCN₂, ZnGeP₂, CdSnAs₂, ZnSnSb₂, CuGeP₃, CuSi₂P₃, (Cu, Ag)(Al, Ga, In, Ti, Fe)(S, Se, Te)₂, Si₃N₄, Ge₃N₄. Al₂O₃, (Al, Ga, In)₂(S, Se, Te)₃, Al₂CO, and appropriate combinations of two or more such materials, or
wherein the nanowires are made of vanadium oxide, or
wherein the supporting member is made of a porous material or reticulated material.

14. The method of claim 8, further comprising the step of compressing the arranged nanowires after the step of arranging the nanowires, preferably further comprising the step of arranging the nanowires on a compressed plate after the step of compressing the arranged nanowires.

15. A method for removing a material adsorbed on the filter of the filtering apparatus according to any one of claims 4-7, comprising the steps of:
applying heat to the filter; and
injecting a nonvolatile gas or air into the inlet of the body.

16. The method of claim 15, wherein the front of the filter has a lower pressure than the rear of the filter has, or
wherein the nonvolatile gas is any one of oxygen, nitrogen, helium, and argon.

17. A method for removing a material adsorbed on the filter of the filtering apparatus according to any one of claims 4-7, comprising the steps of:
injecting a nonvolatile gas or air into the inlet of the body when the front of the filter has a lower pressure than the rear of the filter.

## Patentansprüche

1. Filter (11), umfassend:
ein Stützelement;
eine Mehrzahl von Nanodrähten, die an dem Stützelement abgestützt sind und in einem kristallisierten Zustand so angeordnet sind, dass ein dünner Film von Nanodrähten in einer plattenartigen Form gebildet ist, wobei mehrere Platten miteinander verbunden sind; und
wobei der Filter ferner ein einige Teile eines leeren Raums, der zwischen den Nanodrähten gebildet ist, ausfüllendes molekulares Material umfasst.

2. Filter nach Anspruch 1,
wobei bevorzugt das Material ein beliebiges ausgewählt von Luftmolekülen, Wassermolekülen, und Stickstoffmolekülen ist.

3. Filter nach Anspruch 1 oder 2, wobei die Nanodrähte Halbleiternanodrähte oder Metallnanodrähte beinhalten, oder
wobei die Nanodrähte gebildet aus einem beliebigen Material sind, ausgewählt von Si, Ge, Sn, Se, Te, B, C, P, B-C, B-P(BP₆), B-Si, Si-C, Si-Ge, Si-Sn and Ge-Sn, SiC, BN/BP/BAs, AIN/AIP/AIAs/AISb, GaN/GaP/GaAs/GaSb, InN/InP/InAs/InSb, BN/BP/BAs, AIN/AIP/AIAs/AISb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCI, CuBr, Cul, AgF, AgCl, AgBr, Agl, BeSiN₂, CaCN₂, ZnGeP₂, CdSnAs₂, ZnSnSb₂, CuGeP₃, CuSi₂P₃, (Cu, Ag)(Al, Ga, In, Ti, Fe)(S, Se, Te)₂, Si₃N₄, Ge₃N₄, Al₂O₃, (Al, Ga, In)₂(S, Se, Te)₃, Al₂CO, und aus entsprechenden Kombinationen von zwei oder mehr von solchen Materialien, oder
wobei die Nanodrähte aus Vanadiumoxid gebildet sind, oder
wobei das Stützelement aus einem porösen Material oder netzartigen Material gebildet ist.

4. Filtervorrichtung (10), umfassend:
einen wie durch einen der vorhergehenden Ansprüche definierten Filter (11); und
einen Körper (12), in dem der Filter eingesetzt und gesichert ist, und der einen Einlass zum Führen eines eingeführten Fluides zu dem Filter und einen Auslass zum Ausspeisen des Fluides, welches durch den Filter gefiltert ist, nach außen.

5. Filtervorrichtung nach Anspruch 4, ferner umfassend ein Heizelement (13) zum Zuführen von Wärme zu dem Filter, das an dem vorderen Bereich oder an dem hinteren Bereich des Filters angebracht ist, wobei bevorzugt das Heizelement in einer netzartigen Form gebildet ist.

6. Filtervorrichtung nach Anspruch 4, ferner umfassend ein Heizelement (14) zum Zuführen von Wärme zu dem Filter, das entlang der äußeren Umfangsfläche des Körpers gewunden ist, oder
wobei der Körper ferner ein Druckerzeugungselement zum Bewirken einer Druckdifferenz zwischen dem vorderen Bereich und dem hinteren Bereich des Filters beinhaltet, oder
wobei der Körper mit einer Mehrzahl von Pfaden, durch die sich das Fluid zwischen dem Einlass und dem Auslass bewegt, bereitgestellt ist,
wobei bevorzugt wenigstens ein Filter an den Pfaden angebracht ist, oder
wobei bevorzugt wenigstens ein Ventil an den Pfaden zum Steuern des Fluidflusses angebracht ist.

7. Filtervorrichtung nach Anspruch 4, wobei eine Mehrzahl von Filtern an dem Körper angebracht sind,
wobei bevorzugt die Mehrzahl von Filtern mit derselben Dichte oder mit unterschiedlichen Dichten angeordnete Nanodrähte aufweisen.

8. Verfahren zum Herstellen eines Filters (11), umfassend die Schritte von:
Bereitstellen eines Stützelements; und
derartiges Anordnen einer Mehrzahl von kristallisierten Nanodrähten an dem Stützelement, so dass ein dünner Film von Nanodrähten in einer plattenartigen Form gebildet wird, wobei mehrere Platten miteinander verbunden werden; und
ferner umfassend den Schritt des Füllens von einigen Teilen des leeren Raums, der zwischen den Nanodrähten nach dem Schritt des Anordnens der Nanodrähte gebildet ist, mit einem molekularen Material.

9. Verfahren nach Anspruch 8, ferner umfassend den Schritt eines derartigen Anbringens eines Klebeelements an die Oberfläche des Stützelements, so dass die Nanodrähte an das Stützelement ohne Umstände und fest vor dem Schritt des Anordnens der Nanodrähte gesichert werden.

10. Verfahren nach Anspruch 9, ferner umfassend den Schritt eines derartigen Füllens des Klebeelements, so dass das leichte Lösen einer Verbindung zwischen den Nanodrähten, die an dem Stützelement angeordnet sind, nach dem Schritt des Anordnens der Nanodrähte verhindert wird.

11. Verfahren nach Anspruch 9, wobei ein chemisches Material mit einer Silangruppe als das Klebeelement verwendet wird,
wobei bevorzugt das chemische Material mit einer Silangruppe APTES (AminoPropylTriEthoxySilan) oder APTMS ((3-AminoPropyl)TriMethoxySilan) ist.

12. Verfahren nach Anspruch 8, ferner umfassend den Schritt des Hydophilmachens der Oberfläche des Stützelements durch einen O₂ Veraschungsprozess oder durch Anbringen von Sauerstoff an die Oberfläche des Stützelements vor dem Schritt des Anordnens der Nanodrähte, oder
wobei bevorzugt das Material ein beliebiges ausgewählt von Luftmolekülen, Wassermolekülen, und Stickstoffmolekülen ist.

13. Verfahren nach Anspruch 8, wobei der Schritt des Anordnens der Nanodrähte durch ein beliebiges von einem Spincoatingverfahren, einem Adsorptionsverfahren unter Verwendung eines Spuits oder einer Pipette, und ein Sprühverfahren durchgeführt wird, oder
wobei die Nanodrähte in einer Filmform an einer inneren Umfangsoberfläche des Stützelements angeordnet werden, oder
wobei die Nanodrähte Halbleiternanodrähte oder Metallnanodrähte beinhalten, oder wobei die Nanodrähte aus einem beliebigen Material gebildet sind, ausgewählt von Si, Ge, Sn, Se, Te, B, C, P, B-C, B-P(BP₆), B-Si, Si-C, Si-Ge, Si-Sn and Ge-Sn, SiC, BN/BP/BAs, AIN/AIP/AIAs/AISb, GaN/GaP/GaAs/GaSb, InN/InP/InAs/InSb, BN/BP/BAs, AIN/AIP/AIAs/AISb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, Cul, AgF, AgCl, AgBr, Agl, BeSiN₂, CaCN₂, ZnGeP₂, CdSnAs₂, ZnSnSb₂, CuGeP₃, CuSi₂P₃, (Cu, Ag)(Al, Ga, In, Ti, Fe)(S, Se, Te)₂, Si₃N₄, Ge₃N₄, Al₂O₃, (Al, Ga, In)₂(S, Se, Te)₃, Al₂CO, und entsprechenden Kombinationen von zwei oder mehr solcher Materialien gebildet werden, oder
wobei die Nanodrähte aus Vandiumoxid gebildet sind, oder
wobei das Stützelement aus einem porösen Material oder netzartigen Material gebildet ist.

14. Verfahren nach Anspruch 8, ferner umfassend den Schritt des Zusammenpressens der angeordneten Nanodrähte nach dem Schritt des Anordnens der Nanodrähte, ferner umfassend bevorzugt den Schritt des Anordnens der Nanodrähte an einer zusammengepressten Platte nach dem Schritt des Zusammenpressens der angeordneten Nanodrähte.

15. Verfahren zum Entfernen eines an dem Filter oder der Filtervorrichtung nach einem der Ansprüche 4-7 adsorbierten Materials, umfassend die Schritte von:
Zuführen von Wärme zu dem Filter; und
Einspeisen eines nichtflüchtigen Gases oder Luft in den Einlass des Körpers.

16. Verfahren nach Anspruch 15, wobei der vordere Bereich des Filters einen niedrigeren Druck als der hintere Bereich des Filters aufweist, oder
wobei das nichtflüchtige Gas ein beliebiges von Sauerstoff, Stickstoff, Helium, und Argon ist.

17. Verfahren zum Entfernen eines an dem Filter oder der Filtervorrichtung nach einem der Ansprüche 4-7 adsorbierten Materials, umfassend die Schritte von:
Einspeisen eines nichtflüchtigen Gases oder Luft in den Einlass des Körpers, wenn der vordere Bereich des Filters einen niedrigeren Druck als der hintere Bereich des Filters aufweist.

## Revendications

1. Filtre (11) comprenant :
un élément de support ;
une pluralité de nanofils supportés sur l'élément de support et agencés à l'état cristallisé de façon à former un film mince de nanofils sous la forme d'une plaque, de telle sorte que de multiples plaques sont jointes les unes aux autres ; et
de telle sorte que le filtre comprend en outre un matériau moléculaire remplissant certaines parties d'un espace vide formé entre les nanofils.

2. Filtre selon la revendication 1, dans lequel de préférence le matériau est l'un quelconque choisi parmi les molécules d'air, les molécules d'eau, et les molécules d'azote.

3. Filtre selon la revendication 1 ou 2, dans lequel les nanofils comprennent des nanofils semi-conducteurs ou des nanofils métalliques, ou
dans lequel les nanofils sont faits en n'importe quel matériau choisi parmi Si, Ge, Sn, Se, Te, B, C, P, B-C, B-P(BP₆), B-Si, Si-C, Si-Ge, Si-Sn et Ge-Sn, SiC, BN/BP/BAs, AlN/AlP/AlAs/AlSb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, CuI, AgF, AgCl, AgBr, AgI, BeSiN₂, CaCN₂, ZnGeP₂, CdSnAS₂, ZnSnSb₂, CuGeP₃, CuSi₂P₃, (Cu, Ag)(Al, Ga, In, Ti, Fe)(S, Se, Te)₂, Si₃N₄, Ge₃N₄, Al₂O₃, (Al, Ga, In)₂(S, Se, Te)₃, Al₂CO et des combinaisons appropriées de deux ou plus de ces matériaux, ou
dans lequel les nanofils sont faits en oxyde de vanadium, ou
dans lequel l'élément de support est fait en un matériau poreux ou un matériau réticulé.

4. Dispositif filtrant (10) comprenant :
un filtre (11) tel que défini par l'une quelconque des revendications précédentes ; et
un corps (12) dans lequel le filtre est inséré et assujetti, et qui a une entrée pour guider un fluide introduit vers le filtre et une sortie pour évacuer vers l'extérieur le fluide filtré à travers le filtre.

5. Dispositif filtrant selon la revendication 4, comprenant en outre un élément chauffant (13), installé à l'avant ou à l'arrière du filtre, pour appliquer de la chaleur au filtre, dans lequel de préférence l'élément chauffant est formé sous une forme réticulée.

6. Dispositif filtrant selon la revendication 4, comprenant en outre un élément chauffant (14) enroulé le long de la surface périphérique extérieure du corps, pour appliquer de la chaleur au filtre, ou
dans lequel le corps comprend en outre un élément générateur de pression servant à provoquer une différence de pression entre l'avant et l'arrière du filtre, ou
dans lequel le corps est doté d'une pluralité de trajets par l'intermédiaire desquels le fluide se déplace entre l'entrée et la sortie,
dans lequel de préférence au moins un filtre est installé au niveau des trajets, ou
dans lequel de préférence vau moins une vanne est installée au niveau des trajets afin de contrôler l'écoulement du fluide.

7. Dispositif filtrant selon la revendication 4, dans lequel une pluralité de filtres sont installés au niveau du corps,
dans lequel de préférence la pluralité de filtres ont les nanofils agencés avec la même densité ou avec des densités différentes.

8. Procédé pour fabriquer un filtre (11), comprenant les étapes consistant à :
fournir un élément de support ; et
agencer une pluralité de nanofils cristallisés sur l'élément de support de façon à former un film mince de nanofils sous la forme d'une plaque, de telle sorte que de multiples plaques sont jointes les unes aux autres ; et
comprenant en outre l'étape consistant à remplir d'un matériau moléculaire certaines parties de l'espace vide formé entre les nanofils après l'étape d'agencement des nanofils.

9. Procédé selon la revendication 8, comprenant en outre l'étape consistant à attacher un élément adhésif sur la surface de l'élément de support de façon que les nanofils soient aisément et fermement assujettis à l'élément de support avant l'étape d'agencement des nanofils.

10. Procédé selon la revendication 9, comprenant en outre l'étape consistant à remplir l'élément adhésif de façon à empêcher une connexion entre les nanofils agencés sur l'élément de support d'être aisément libérée après l'étape d'agencement des nanofils.

11. Procédé selon la revendication 9, dans lequel un matériau chimique ayant un groupe silane est utilisé en tant qu'élément adhésif,
dans lequel de préférence le matériau chimique ayant un groupe silane est l'APTES (aminopropyltriéthoxysilane) ou l'APTMS ((3-aminopropyl)triméthoxysilane).

12. Procédé selon la revendication 8, comprenant en outre l'étape consistant à rendre la surface de l'élément de support hydrophile au moyen d'un procédé d'incinération à l'O₂ ou par fixation d'oxygène sur la surface de l'élément de support avant l'étape d'agencement des nanofils, ou
dans lequel de préférence le matériau est l'un quelconque choisi parmi les molécules d'air, les molécules d'eau, et les molécules d'azote.

13. Procédé selon la revendication 8, dans lequel l'étape d'agencement des nanofils est mise en oeuvre par l'un quelconque parmi un procédé de revêtement centrifuge, un procédé d'adsorption utilisant une projection ou une pipette, et un procédé de pulvérisation, ou
dans lequel les nanofils sont agencés sous une forme de film sur la surface périphérique intérieure de l'élément de support, ou
dans lequel les nanofils comprennent des nanofils, semi-conducteurs ou des nanofils métalliques, ou
dans lequel les nanofils sont faits en n'importe quel matériau choisi parmi Si, Ge, Sn, Se, Te, B, C, P, B-C, B-P(BP₆), B-Si, Si-C, Si-Ge, Si-Sn et Ge-Sn, SiC, BN/BP/BAs, AlN/AlP/AlAs/AlSb, GaN/GaP/GaAs/GaSb, InN/InP/InAs/InSb, ZnO/ZnS/ZnSe/ZnTe, CdS/CdSe/CdTe, HgS/HgSe/HgTe, BeS/BeSe/BeTe/MgS/MgSe, GeS, GeSe, GeTe, SnS, SnSe, SnTe, PbO, PbS, PbSe, PbTe, CuF, CuCl, CuBr, Cul, AgF, AgCl, AgBr, AgI, BeSiN₂, CaCN, ZnGeP₂, CdSnAs₂, ZnSnSb₂, CuGeP₃, CuSi₂P₃, (Cu, Ag) (Al, Ga, In, Ti, Fe) (S, Se, Te) 2, Si₃N₄ , Ge3N4, Al₂O₃, (Al, Ga, In)₂ (S, Se, Te)₃, Al₂CO et des combinaisons appropriées de deux ou plus de ces matériaux, ou
dans lequel les nanofils sont faits en oxyde de vanadium, ou
dans lequel l'élément de support est fait en un matériau poreux ou un matériau réticulé.

14. Procédé selon la revendication 8, comprenant en outre l'étape consistant à compresser les nanofils agencés après l'étape d'agencement des nanofils, de préférence comprenant en outre l'étape consistant à agencer les nanofils sur une plaque compressée après l'étape de compression des nanofils agencés.

15. Procédé pour retirer un matériau adsorbé sur le filtre du dispositif filtrant selon l'une quelconque des revendications 4 à 7, comprenant les étapes consistant à :
appliquer de la chaleur au filtre ; et
injecter un gaz non volatil ou de l' air dans l'entrée du corps.

16. Procédé selon la revendication 15, dans lequel l'avant du filtre a une pression inférieure à celle de l'arrière du filtre, ou
dans lequel le gaz non volatil est l'un quelconque parmi l'oxygène, l'azote, l'hélium, et l'argon.

17. Procédé pour retirer un matériau adsorbé sur le filtre du dispositif filtrant selon l'une quelconque des revendications 4 à 7, comprenant l'étape consistant à :
injecter un gaz non volatil ou de l'air dans l'entrée du corps quand l'avant du filtre a une pression inférieure à celle de l'arrière du filtre.
